# EUROPEAN PATENT SPECIFICATION

(11) **EP 3 867 739 B1**
(45) Date of publication and mention of the grant of the patent: **19.06.2024**
(21) Application number: 19745088.5
(22) Date of filing: 23.07.2019
(51) Int. Cl.: G06F 3/06, G06F 16/174

(54) **DEVICES, SYSTEM AND METHODS FOR DEDUPLICATION**
VORRICHTUNGEN, SYSTEM UND VERFAHREN ZUR DEDUPLIZIERUNG
DISPOSITIFS, SYSTÈME ET PROCÉDÉS DE DÉDUPLICATION

(43) Date of publication of application: 25.08.2021
(73) Proprietor: Huawei Technologies Co., Ltd., Longgang District Shenzhen, Guangdong 518129 (CN)
(72) Inventor: KUVENT, Aviv, 80992 Munich (DE); YEGER, Asaf, 80992 Munich (DE); MOR, Yaron, 80992 Munich (DE)
(74) Representative: Roth, Sebastian
(86) International application number: PCT/EP2019/069753
(87) International publication number: WO 2021/013335

(56) References cited:
- US-A1- 2012 221 817
- WEI DONG FRED DOUGLIS EMC PRINCETON UNIVERSITY SAZZALA REDDY EMC: "Tradeoffs in Scalable Data Routing for Deduplication Clusters", USENIX, USENIX, THE ADVANCED COMPUTING SYSTEMS ASSOCIATION, 17 December 2010 (2010-12-17), pages 1-15, XP061009893, [retrieved on 2010-12-17]
- "EMC Data Domain Global Deduplication Array - A Detailed Review", , 31 January 2011 (2011-01-31), pages 1-24, XP055205053, Retrieved from the Internet: URL:https://www.coursehero.com/file/520073 16/EMC-Data-Domain-Global-Deduplication-Ar raypdf [retrieved on 2015-07-28]

## Description

### TECHNICAL FIELD

The present disclosure relates to a data storage deduplication method, in particular, to a deduplication method of multiple deduplication servers. The disclosure thus introduces an advanced deduplication method allowing easy deployment of storage servers, in which a global server stores highly-duplicate data among multiple storage servers. The global server can be a centralized server, or a distributed server.

### BACKGROUND

Data deduplication (also referred to as data optimization) refers to reducing the physical amount of bytes of data that need to be stored on disk or transmitted across a network, without compromising the fidelity or integrity of the original data, i.e., the reduction in bytes is lossless and the original data can be completely recovered. By reducing the storage resources to store and/or transmit data, data deduplication thus leads to savings in hardware costs (for storage and network transmission) and data-managements costs (e.g., backup). As the amount of digitally stored data grows, these cost savings become significant.

Data deduplication typically uses a combination of techniques to eliminate redundancy within and between persistently stored files. One technique operates to identify identical regions of data in one or multiple files, and physically storing only one unique region (referred to as chunk), while maintaining a pointer to that chunk in association with the file. Another technique is to mix data deduplication with compression, e.g., by storing compressed chunks.

Many organizations use dedicated servers to store data (storage servers). Data stored by different servers is often duplicated, resulting in space loss. A solution for this problem is deduplication, which is storing only unique data up to a certain granularity, by using hashes to identify duplicates. However, deduplication is performed in the granularity of a specific single storage server.

To prevent duplication of data across servers, a distributed data deduplication is often used. However, one problem of the distributed deduplication is a possible high latency between deduplication servers, which results in a possible read performance degradation. Another problem is a strong dependency between the deduplication nodes. In one example, if one deduplication node is taken out from the cluster, data stored in this node needs to be distributed across other nodes in the cluster. In another example, when adding a new deduplication node, data currently in the cluster may need to be re-distributed between nodes of the cluster, in order to balance the load.

WEI DONG FRED DOUGLIS EMC PRINCETON UNIVERSITY SAZZALA REDDY EMC, "Tradeoffs in Scalable Data Routing for Deduplication Clusters", USENIX, USENIX, THE ADVANCED COMPUTING SYSTEMS ASSOCIATION, (20101217), pages 1 - 15, discloses a deduplication cluster including multiple storage nodes, in which incoming data streams are divided into chunks, a fingerprint that uniquely identifies is computed for each chunk, and the chunks are grouped into a super-chunk.

### SUMMARY

In view of the above-mentioned disadvantages, embodiments of the present invention aim to provide an advanced deduplication method, in particular, with an additional deduplication tier. An objective is to avoid a high latency of the conventional distributed deduplication. One aim is to provide a simple and flexible deployment of multiple independent storage servers.

The scope of the invention is defined by the enclosed independent claims. Advantageous implementations of the embodiments of the present invention are further defined in the dependent claims.

A first aspect of the invention provides a global server for deduplicating multiple storage servers, wherein the global server is configured to: receive, from a storage server, a request to store a data chunk on the global server; determine whether the data chunk is highly-duplicated among the storage servers; if the data chunk is highly-duplicated, accept the request; and if the data chunk is not highly-duplicated, reject the request.

This invention presents a concept of deduplication of deduplication (nested deduplication), including an additional dedupication tier (performing deduplication of multiple deduplication servers). A global deduplication server (GDS) is proposed, which will store highly-duplicated data. The term "global server" is an abbreviation of "global deduplication server", and refers to a server for handling the highly-duplicated data in a storage system comprising multiple deduplication servers. In this context, the term "global" refers to the network topology and can be synonymously used for "master", "overall" or "central".

### BRIEF DESCRIPTION OF DRAWINGS

The above described aspects and implementation forms of the present invention will be explained in the following description of specific embodiments in relation to the enclosed drawings, in which
FIG. 1 shows a global server according to an embodiment of the invention.
FIG. 2 shows a topology according to an embodiment of the invention.
FIG. 3 shows another topology according to an embodiment of the invention.
FIG. 4 shows a communication between a global server and a storage server according to embodiments of the present invention.
FIG. 5 shows a communication between a global server and a storage server according to embodiments of the present invention.
FIG. 6 shows a communication between a global server and a storage server according to embodiments of the present invention.
FIG. 7 shows a communication between a global server and a storage server according to embodiments of the present invention.
FIG. 8 shows a communication between a global server and storage servers according to embodiments of the present invention.
FIG. 9 shows a communication between a global server and a storage server according to embodiments of the present invention.
FIG. 10 shows a communication between a global server and storage servers according to embodiments of the present invention.
FIG. 11 shows a communication between a global server and a storage server according to embodiments of the present invention.
FIG. 12 shows a communication between a global server and a storage server according to embodiments of the present invention.
FIG. 13 shows a global server according to an embodiment of the invention.
FIG. 14 shows a flowchart of a method according to an embodiment of the invention.
FIG. 15 shows a flowchart of another method according to an embodiment of the invention.

### DETAILED DESCRIPTION OF EMBODIMENTS

Illustrative embodiments of method, apparatus, and program product for data storage deduplication are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

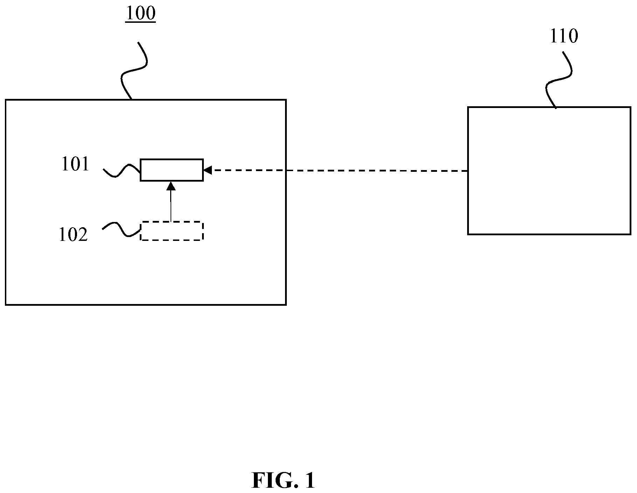

FIG. 1 shows a global server (also referred to as global deduplication server) 100 according to an embodiment of the invention. The global server 100 may comprise processing circuitry (not shown) configured to perform, conduct or initiate the various operations of the global server 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the global server 100 to perform, conduct or initiate the operations or methods described herein. In one implementation, the global server 100 can be implemented as a separated device (e.g. a server), or implemented as a module deployed in one storage server 110. In another implementation, the global server 100 or the storage server 110 can be implemented as a chipset which comprises one or more processors, and storage modules. The embodiments of the invention should not be interpreted to restrict the scope of the protection.

The global server 100 is adapted for deduplicating multiple storage servers 110 (one of which is illustrated). The global server 100 is configured to receive, from a storage server 110, a request 101 to store a data chunk 102. The global server 100 is further configured to determine whether the data chunk 102 is highly-duplicated among the storage servers 110. Accordingly, if the data chunk 102 is highly-duplicated, the global server 100 is configured to accept the request 101. Otherwise, if the data chunk 102 is not highly-duplicated, the global server 100 is configured to reject the request 101.

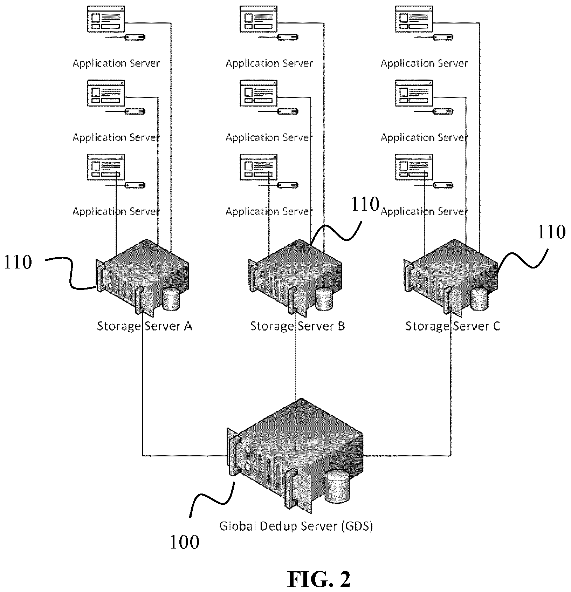

This embodiment of the invention presents a concept of deduplication of deduplication (nested deduplication), with an additional deduplication tier. That is, a deduplication of multiple deduplication servers (storage servers) is performed. FIG. 2 shows a topology of a GDS and storage servers A, B and C, according to an embodiment of the invention. Notably, opposed to a distributed deduplication structure, the storage servers according to an embodiment of the invention are independent of each other. A number of application servers have access to the respective storage server. A user could write/read data to the storage server through the application server.

In particular, the GDS shown in FIG. 2 is the global server 100 according to an embodiment of the invention, as shown in FIG. 1. Each of the storage servers A, B and C shown in FIG. 2 is the storage server 100 according to an embodiment of the invention, as shown in FIG. 1. The GDS aims to store the highly-duplicated data of the storage servers. In particular, the determination of a highly-duplicated data is done by the GDS, according to some configurable thresholds. The storage servers communicate with the GDS and send requests to store data, which the GDS may accept or reject according to the configured thresholds.

The global server 100 according to an embodiment of the invention is configured to determine that the data chunk 102 is highly-duplicated among the storage servers 110, if a hash value of the data chunk 102 is associated at the global server 100 with a water mark equal to or higher than a determined value.

A hash value of a data chunk is obtained by performing a hash function or hash algorithm on the data chunk. The hash value can be used to uniquely identify respective data chunk. It should be understood that, different types of hash algorithms or functions may be applied to obtain the hash value in this invention. This is not specific limited in embodiments of the invention.

Optionally, the request 101 sent by the storage server 110 may comprise the hash value of the data chunk 102.

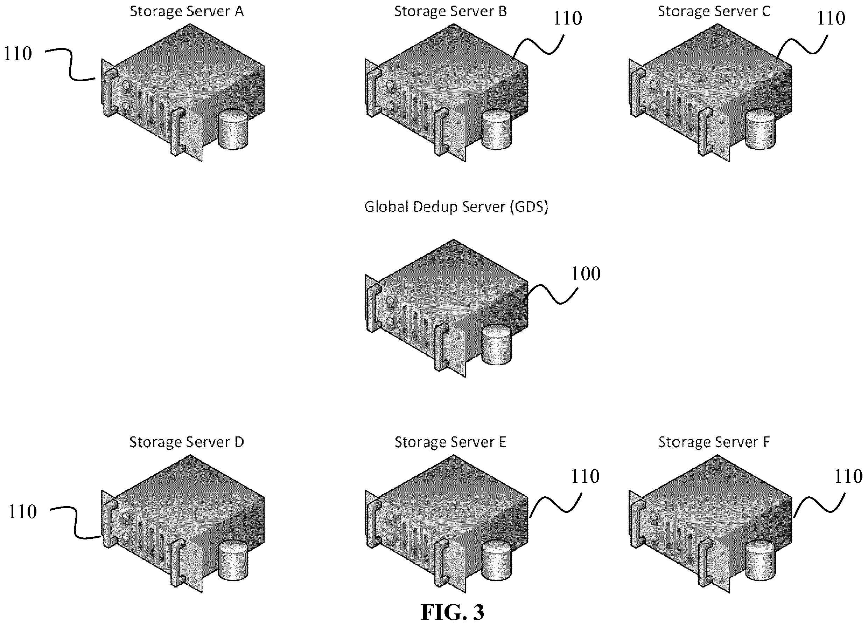

FIG. 3 shows another topology of a GDS and storage servers A - F, according to an embodiment of the invention. It should be noted that, the GDS shown in FIG. 3 may be the same global server 100 according to an embodiment of the invention, as shown in FIG. 1. Each of the storage servers A - F shown in FIG. 3 may be the same storage server 100 according to an embodiment of the invention, as shown in FIG. 1.

The global server 100 according to an embodiment of the invention is configured to create or increase a water mark associated with the hash value, upon receiving the request 101. Accordingly, the global server 100 according to an embodiment of the invention is further configured to register the storage server 110, which sent the request 101, for that hash value. The water mark associated with the hash value may be a reference counter.

It should be noted that, the creating or increasing of the water mark and also the registration of the storage server 110, are triggered only by the receiving of the request 101. Regardless of whether the request 101 to store a data is accepted or rejected by the global server 100, these steps will be performed. That means, even upon rejection of the request 101, the global server 100 still increases the reference count and register the storage server 110.

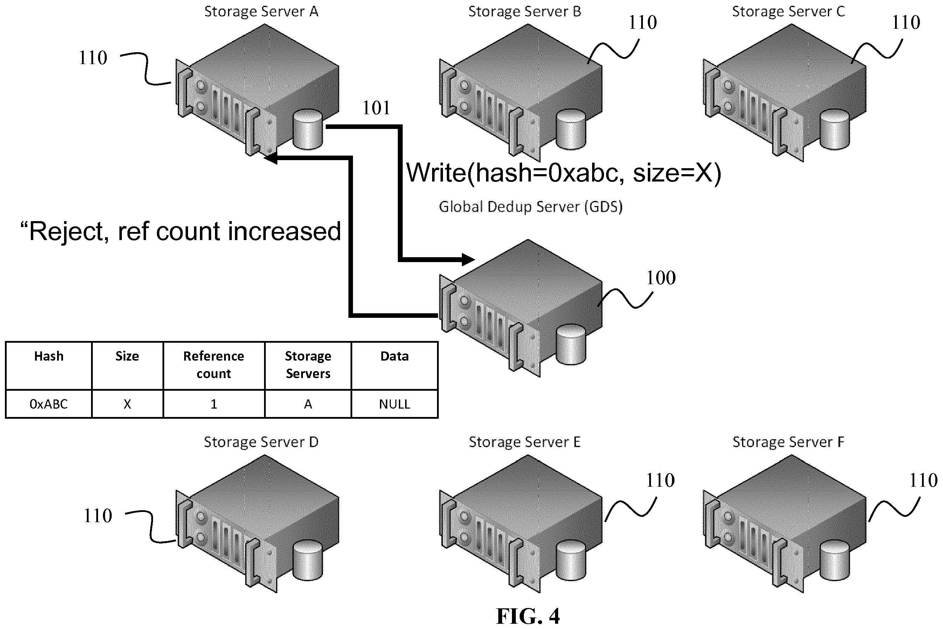

FIG. 4 - 12 show the same topology of the servers as shown in FIG. 3, according to an embodiment of the invention.

In particular, as shown in FIG. 4, storage server A sends a request to write a data, where a hash value of this data is "0×abc". For instance, this is the first time that the GDS receives the storing data request comprising hash value "0×abc". According to an embodiment of the invention, the GDS create a water mark associate with this hash value, and register storage server A for hash value "0×abc", as shown in FIG. 4. Since the GDS receives one request to store the data with hash value "0×abc", the reference counter associate with hash value "0×abc" is set to be 1. In this embodiment, the water mark is still below a determined value, thus this data is determined to be not highly-duplicated. Therefore, the GDS rejects the request to store the data according to an embodiment of the invention.

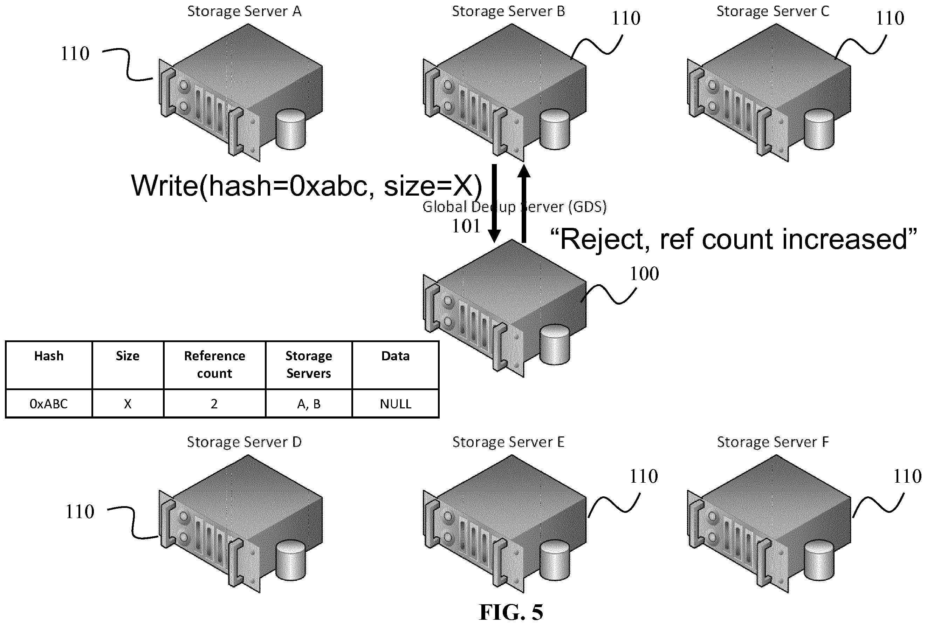

According to an embodiment of the invention, storage server B may also send a request to write a data to the GDS as shown in FIG. 5. In particular, storage server B wants to store the same data as storage server A, as shown in FIG. 4, i.e. the data with hash value "0×abc". Then according to an embodiment of the invention, the GDS increases the water mark associate with this hash value, and register storage server B for hash value "0×abc", as shown in FIG. 5. It can be seen that the reference counter associate with hash value "0×abc" is set to be 2. Since the water mark is still below the determined value according to an embodiment of the invention, this data is still determined to be not highly-duplicated. Therefore, the GDS again rejects the request to store the data according to an embodiment of the invention.

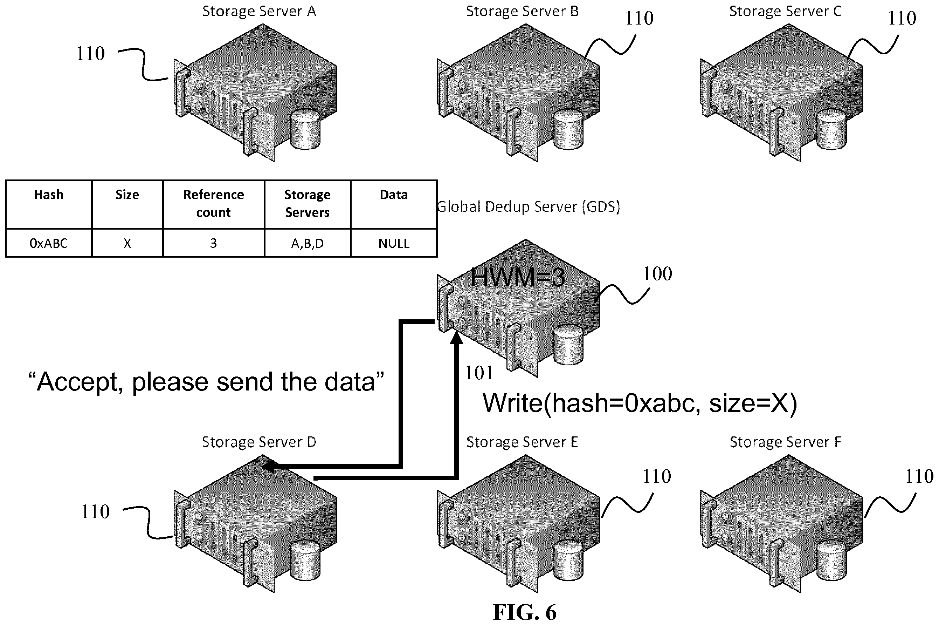

In the following, storage server D may also send a request to write a data to the GDS as shown in FIG. 6. In particular, storage server D wants to store the same data as storage servers A and B, as shown in FIG. 4 and FIG. 5, i.e. the data with hash value "0×abc". Then according to an embodiment of the invention, the GDS increases the water mark associate with this hash value, and register storage server D for hash value "0×abc", as shown in FIG. 6. It can be seen that the reference counter associate with hash value "0×abc" is set to be 3. For instance, a HWM is predefined to be 3, i.e. the determined value according to an embodiment of the invention, used to decide whether the data is highly-duplicated is 3. Since now the water mark/reference counter associated with hash value "0×abc" is equal to the determined value according to an embodiment of the invention, this data is determined to be highly-duplicated. Therefore, the GDS accepts the request to store the data according to an embodiment of the invention, as shown in FIG. 6.

According to embodiments of the invention, the GDS, i.e. the global server 100 as shown in FIG. 1, aims to store the highly-duplicated data. Preferably, if the water mark is equal to a first value, i.e. a HWM, the global server 100 may be configured to instruct the storage server 110 to send the data chunk 102 to the global server 100. And the global server 100 is further configured to store the data chunk 102.

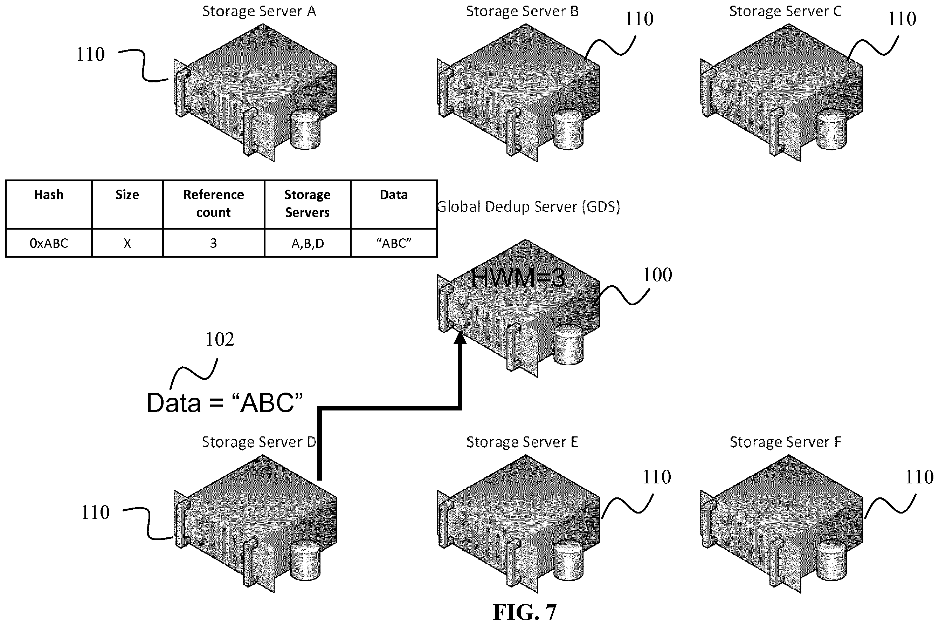

As shown in FIG. 6, upon the acceptance of the request to store the data from storage server D, the GDS further instructs storage server D to send the data. Subsequently, storage server D sends the data, i.e. "ABC", to the GDS, as shown in FIG. 7. It can be seen that the data "ABC" is stored in the GDS, according to the table shown in FIG. 7. It should be also noted that, since the data has not been stored in the GDS according to embodiments shown in FIG. 4 - 6, the corresponding parts in the table shown in FIG. 4-6 display "NULL", which means that no data is stored.

Optionally, after the data chunk 102 is stored, the global server 100, according to an embodiment of the present invention, may be configured to notify the storage server 110 registered for the hash value of the data chunk 102 that the data chunk 102 has been stored.

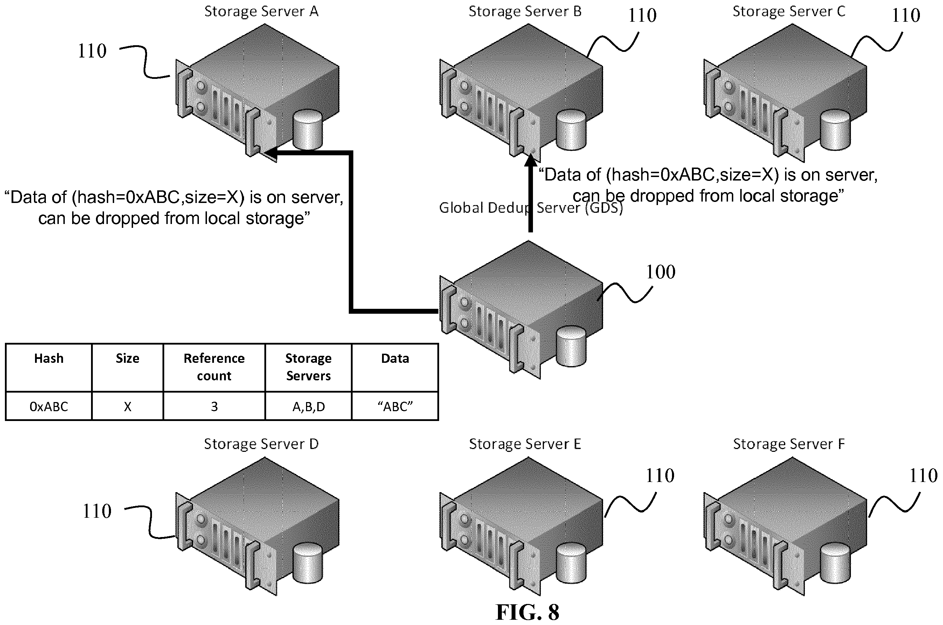

As shown in FIG. 8, the GDS sends a notification according to an embodiment of the invention, to storage server A and B respectively, since storage server A and B are registered for the hash value "0×abc". Storage server A and B can then choose to remove this data from their local storage, and instead rely on the GDS. Optionally, storage server A and B can also decide to keep the data locally, for instance in order to improve read performance.

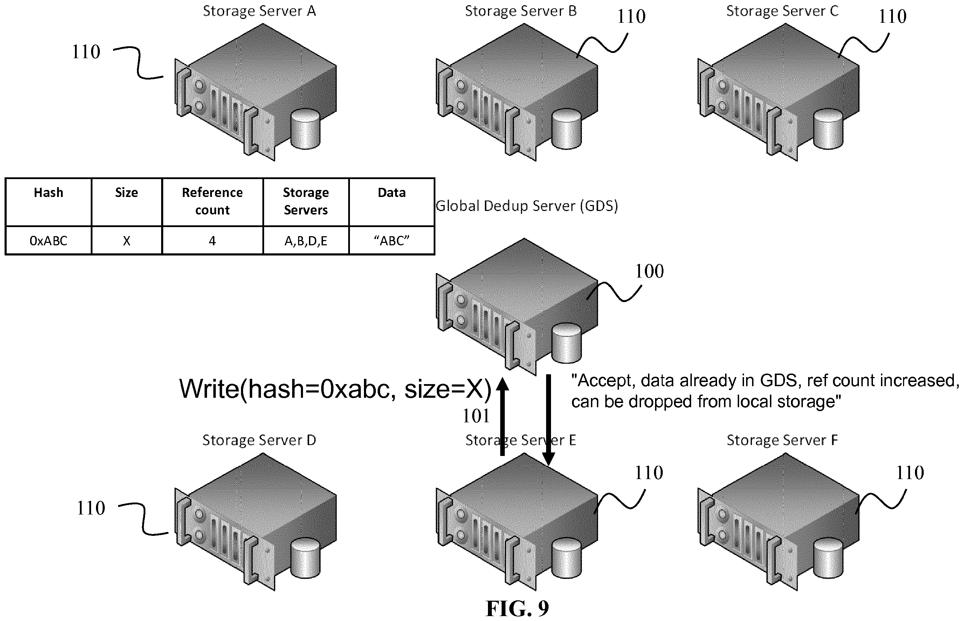

FIG. 9 shows an embodiment of the invention after the data is stored in the GDS. In particular, storage server E sends a request to write a data to the GDS as shown in FIG. 9. The data that storage server E needs to store has the hash value "0×abc". That means this data has been stored in GDS. Then according to an embodiment of the invention, the GDS increases the water mark associate with this hash value, and register storage server E for hash value "0×abc", as shown in FIG. 9. It can be seen that the reference counter associate with hash value "0×abc" is set to be 4. The GDS notifies storage server E that the data is already stored in the GDS. Then accordingly storage server E can decide to remove the data or keep the data locally.

Optionally, the global server 100 according to an embodiment of the invention, is further configured to receive a request 103 to remove a data chunk 102 from the storage server 110. Accordingly, the global server 100 is configured to decrease a value of a water mark associated with the hash value of the data chunk 102 and unregister the storage server 110 for that hash value.

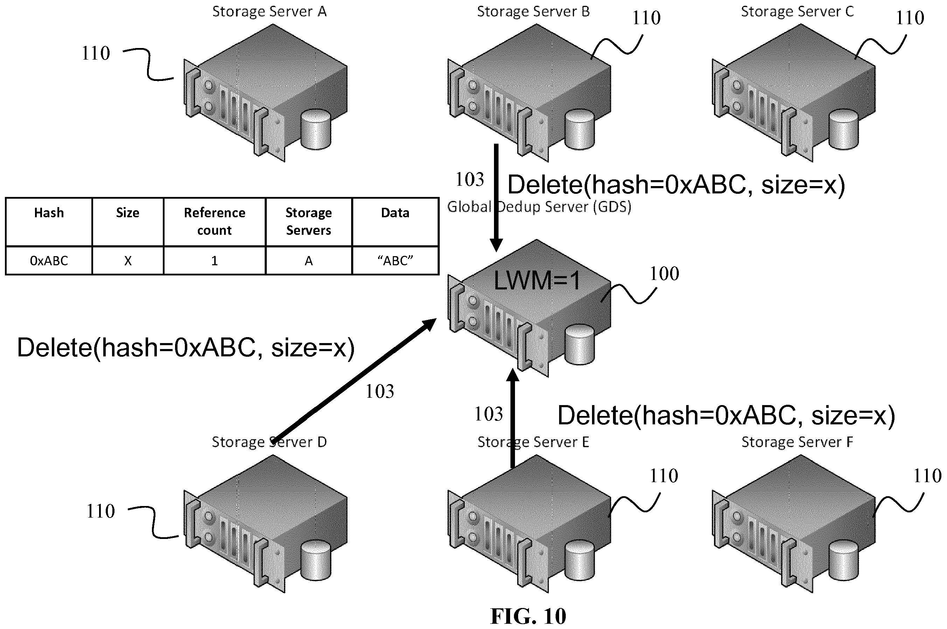

As shown in FIG. 10, storage B, D and E all send a request to delete the data with hash value "0×abc". According to an embodiment of the invention, once the GDS receives a request to delete the data, the GDS decreases the value of the water mark associated with this hash value. In this embodiment, since three requests are received by the GDS, the reference counter associate with hash value "0×abc" is decreased from 4 to 1. It can be seen that, only storage server A is still registered for hash value "0×abc", as shown in FIG. 10.

It should be understood that, since only one storage server still needs the data with hash value "0×abc", this data should not be considered as highly-duplicated data anymore. In order to store only the highly-duplicated data in GDS, mechanisms in order to avoid store unnecessary data should be defined.

Accordingly, if a water mark associated with a hash value of a data chunk 102 is below or equal to a second value, i.e. a low-water mark (LWM), the global server 100 is configured to instruct each storage server 110 registered for the hash value of that data chunk 102, to copy the data chunk 102 from the global server 100. After all storage servers 110 registered for the hash value store the data chunk 102 locally, the global server 100 is configured to remove the data chunk 102.

The GDS can choose different methods to distribute the instructions to storage servers to read data, in order to prevent a burst of traffic in a short window of time. For example, the GDS may split the storage servers that need to read the data into N groups (N depending on total number of storage servers that need to read the data). Possibly, the GDS may only instruct group X to read the data after all storage servers in group X-1 read the data.

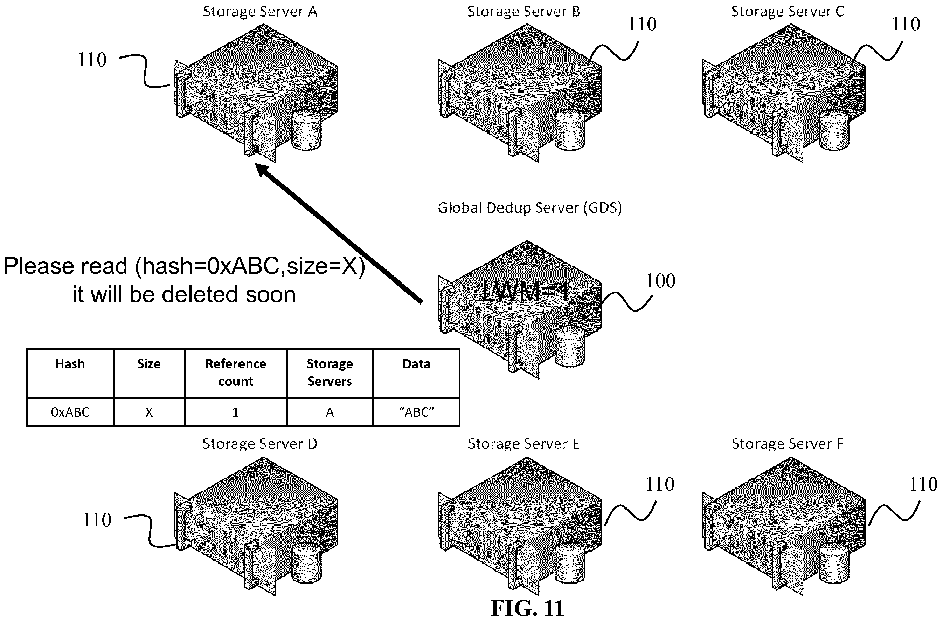

For instance, the second value, namely the LWM is 1, according to an embodiment of the invention as shown in FIG. 10 and FIG. 11. The reference counter associated with hash value "0×abc" is now 1, the data with hash value "0×abc" is considered to be not highly-duplicated. Thus, as shown in FIG. 11, the GDS according to an embodiment of the invention, sends an instruction to storage server A, which is still registered for the hash value "0×abc". This is to instruct storage server A to copy the data from the GDS, since this data will be deleted soon.

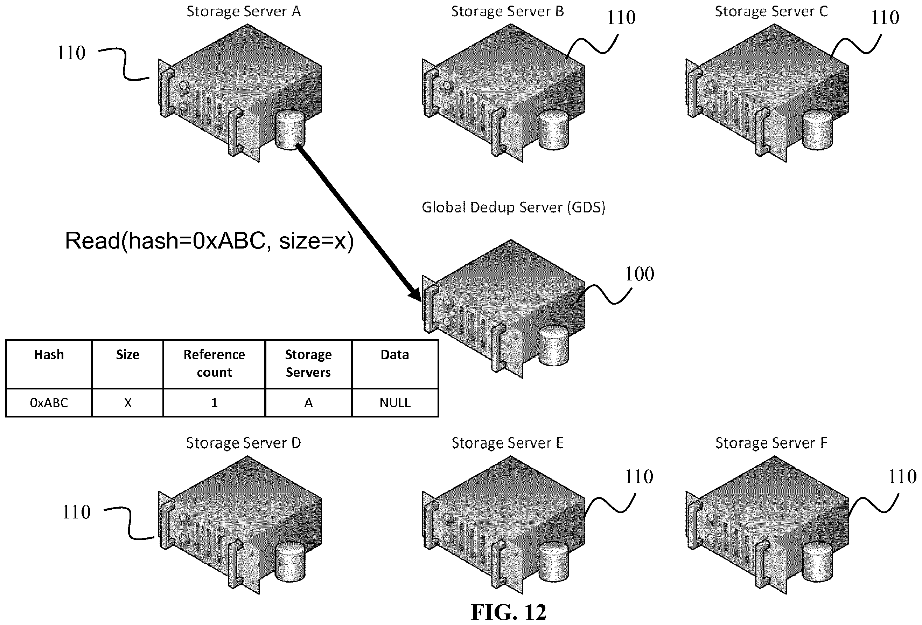

In the following, storage server A copies the data with hash value "0×abc" from the GDS, as shown in FIG. 12. After the data is stored by storage server A locally, the GDS can remove this data as shown in FIG. 12. Particularly, as shown in the table of FIG. 12, the part used to store the data "ABC" now displays "NULL", which means that no data is stored. However, even the data is not stored in the GDS anymore, storage server A is still registered for the data with hash value "0×abc", and the corresponding reference counter is still 1.

It should be understood that, while removal of some data is pending (waiting for all relevant storage servers to copy it), the GDS will continue to update the reference counter for this data when new request arrives. In case the corresponding reference counter exceeds again the HWM, the GDS will update all relevant storage servers. This may include storing the data and notifying all relevant storage servers.

In particular, the first value and second value according to embodiments of the invention, satisfy a condition that the first value is higher than the second value. That means, the HWM is higher that the LWM.

To avoid continually deleting and re-writing the same data, LWM should be set less than HWM. In a possible optimization, to avoid the case of continuous delete and re-write of the same chunk, an LWM per chunk might be stored. Then the LWM of this specific chunk may be decreased. In one example, a default configuration may be: HWM=7, and LWM=5.

For chunk A, ref_count = 8 (data stored at the GDS), if the ref_count is decreased to 5, resulting in deletion of the chunk A. Then if ref_count of chunk A is increased to 7 again, the data will be re-written to the GDS. Thus, the GDS can then decrease LWM to 3 for chunk A only, to avoid the continuous deleting and re-writing.

Specifically, the HWM and the LWM can be defined based on percentages of the number of storage servers communicating with the GDS. It should be noted that, if free storage space of the GDS decreases below a certain threshold, the GDS is allowed to dynamically change its HWM and/or LWM. Preferably, the global server 100 according to an embodiment of the invention, may be configured to adjust the first and/or second values dynamically, particularly based on free storage space left in the global server 100.

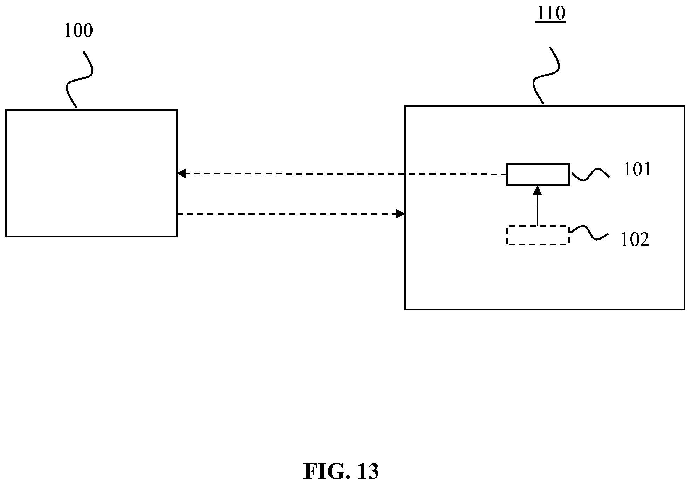

FIG. 13 shows a storage server 110 according to an embodiment of the invention. The storage server 110 may comprise processing circuitry (not shown) configured to perform, conduct or initiate the various operations of the storage server 110 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the storage server 110 to perform, conduct or initiate the operations or methods described herein.

The storage server 110 is adapted for deduplicating at a global servers. In particular, the storage server 110 shown in FIG. 13 is the same storage server 110 as shown in FIG. 1 - 12. And the global server 100 shown in FIG. 13 is the same global server 100 as shown in FIG. 1 - 12. The storage server 110, according to an embodiment of the invention, is configured to send, to the global server 100, a request 101 to store a data chunk 102. Further, the storage server 110 is configured to receive, from the global server 100, an information indicating that the global server 100 accepts the request 101 or rejects the request 101.

Since data stored by multiple deduplication servers or storage servers is often duplicated, to avoid a space loss, the storage server may request to store some data in a GDS.

Optionally, the request 101 sent to the global server 100 may comprise a hash value of the data chunk 102.

When a user writes data to the storage server 110, the storage server 110 may perform chunking and hashing of the data, to obtain a hash value of the data chunk. Therefore, the storage server 110, according to an embodiment of the invention, may be further configured to receive, from a user, a request to write the data chunk 102. Subsequently, the storage server 110 may be configured to store the hash value of the data chunk 102, based on the user's request.

Normally, a storage server will not send duplicate add or remove requests for the same data to the GDS. It is the responsibility of the storage server to identify duplicate requests for data from an end-user. This might be achieved by each storage server locally storing the hashes of data (including those data stored in the GDS), and reference counting for them (local deduplication). Thus, according to an embodiment of the invention, the storage server 110 may be configured to create or increase a local counter associated with the hash value.

In addition, for new data chunks received from the end-user, the storage server may also decide whether to send the hashes of the data chunks to the GDS. Therefore, according to an embodiment of the invention, the storage server 110 may be configured to determine, whether to send to the global server 100, the request 101 to store the data chunk 102, if the local counter is equal to or greater than 1.

It should be noted that, storage servers can decide which data to try to offload to the GDS. For instance, frequently accessed data might remain in the local storage server to allow for a low read latency. In addition, storage servers can also decide to cache some data locally (in addition to storing it in GDS), to improve read performance. Further, storage servers can also decide to not offload certain data to the GDS, e.g. some private data, or for security reasons.

After the storage server 110 requests to store a data chunk in the global server 100, if the information received from the global server 100 indicates that the global server 100 accepts the request 101, the storage server 110, according to an embodiment of the invention, is configured to receive, from the global server 100, an instruction to send the data chunk 102 to the global server 100. In such case, it means that the data chunk 102 is highly-duplicated. In particular, this is the same step as shown in FIG. 6. And same as FIG. 7, the storage server 110 is further configured to send the data chunk 102 to the global server 100.

Alternatively, if the information received from the global server 100 indicates that the global server 100 rejects the request 101, the storage server 110 is configured to store the data chunk 102 locally. In such case, it means that the data chunk 102 is not highly-duplicated, then the storage server 110 needs to locally store the data chunk 102.

If a data chunk 102 is determined to be highly-duplicated by the global server 100, the global server 100 may inform the storage server 110 which has sent a request to store that data, that the data chunk 102 has been stored in the global server 100. Accordingly, the storage server 110 according to an embodiment of the invention, is configured to receive, from the global server 100, a notification that the data chunk 102 has been stored in the global server 100. The storage server 110 may be configured to remove the locally stored data chunk 102.

In case a user requests to read the data chunk 102 from the storage server 110, the storage server 110 may check if it is stored locally or if it is in the GDS. If the data is in the GDS, the storage server 110 requests the data from the GDS. Thus, the storage server 110 according to embodiment of the invention, is further configured to request the data chunk 102 from the global server 100, if a user requests to read the data chunk 102.

Notably, to improve read performance, the storage server 110 can also decide to cache some data locally, even the data has been stored in the GDS. Thus, the storage server 110 according to embodiment of the invention, may be further configured to additionally store the data chunk 102 locally.

In case a user requests to delete a data from the storage server 110, the storage server 110 according to embodiment of the invention, may be further configured to decrease a local counter associated with the hash value of the data chunk 102.

Optionally, if the local counter associated with the hash value of the data chunk 102 is equal to 0, that is, this is the last reference to the data chunk 102, the storage server 110 is configured to delete the data chunk 102 if it is locally stored. If the data chunk 102 is stored in the global server 100, the storage server 110 is configured to send, to the global server 100, a request 103 to remove that data chunk 102. In case the data chunk 102 is locally stored in the storage server 110 and also stored in the global server 100, the storage server 110 may delete the data chunk 102, and also request the global server 100 to remove the data chunk 102.

Optionally, the storage server 110 according to an embodiment of the invention, may be configured to receive, from the global server 100, an instruction to copy a data chunk 102 from the global server 100. This may be happened when the data chunk 102 is not highly-duplicated anymore. Accordingly, the storage server 110 may be configured to copy the data chunk 102 from the global server 100, and store the data chunk 102 locally.

Further, storage servers, according to embodiments of the invention, can start or stop communicating with the GDS without affecting other storage servers. In particular, the storage server 110 may be configured to determine to stop communicating with the global server 100. Then the storage server 110 may be configured to copy, from the global server 100, all data chunks 102 previously requested to be stored in the global server 100, and store the data chunks 102 locally. After that, the storage server 110 may be configured to stop communicating with the global server 100. Since all storage servers are independent with each other, one storage server leaving the topology will not affect other remaining storage servers.

This invention also provides a system comprising a global server 100 and multiple storage servers 110. For instance, the system according to an embodiment of the invention may be a system as shown in FIG. 2, or as shown in FIG. 3 - 12. In these topologies, the GDS is connected to all of its storage servers, but the storage servers do not need to be connected to each other (as opposed to distributed deduplication topology).

The GDS will be highly-available using known high availability (HA) techniques, such as mirroring, clustering or using redundant array of inexpensive disks (RAID), to prevent the GDS from being a single point of failure.

GDS may contain only highly cross-server deduplication data, particularly through the following means:
- by allowing the GDS to reject requests to store data;
- by allowing the GDS to decide to vacate data and return ownership of it to the relevant storage servers;
- by allowing the GDS to dynamically update the LWN and/or HWM (using AI or deterministic algorithms).

Further, storage servers are independent of each other, including the following advantages:
- High latency between a storage server and the GDS will not affect other storage servers.
- Storage servers can start or stop communicating with the GDS without affecting other storage servers.
- Storage server communicate with the GDS in a many-to-one topology, while in distributed deduplication, the communication is many-to-many.

A structure of servers proposed by embodiments of the invention, can apply to situations such as: not all storage servers have the same high availability level, and/or not all storage servers have the same latency. In this invention, any storage server can have different high availability level as the storage servers do not depend on each other. A high latency of one storage server affecting other storage servers, is effectively avoided, as it will exist in distributed deduplication architecture.

Furthermore, the latency for reading a data from a storage server is only affected by the latency between itself and the GDS. This is a benefit over distributed deduplication deployment, where the latency of read depends on the latency between the different storage servers belonging to one deduplication cluster.

The storage server can decide which data to offload to the GDS and which to continue storing locally, also allowing it to decrease latency. This solution is also scalable, since storage servers can be added and removed easily, also the GDS can be dynamically configured to support the amount of data allowed by its resources, by modifying the HWM and/or the LWM (e.g. by employing AI).

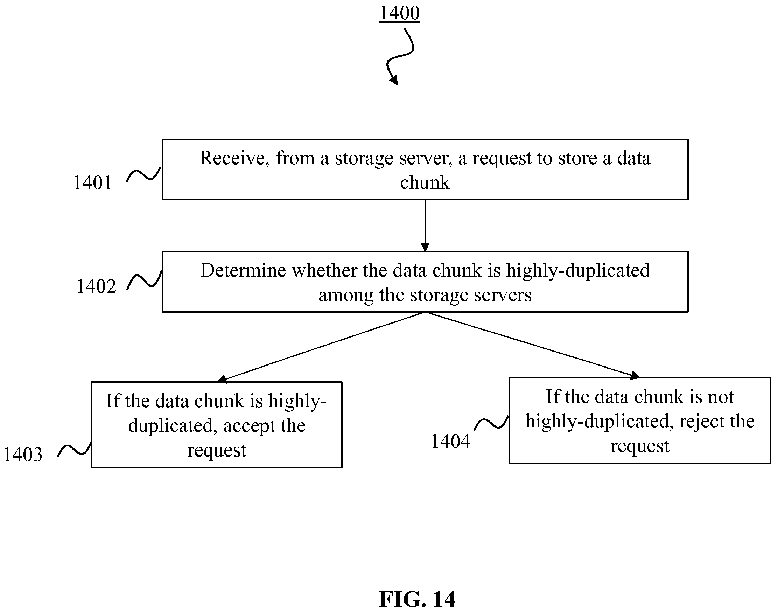

FIG. 14 shows a method 1400 performed by a global server 100 for deduplicating multiple storage servers 110 according to an embodiment of the present invention. In particular, the global server 100 is the global server 100 of FIG. 1. The method 1400 comprises: a step 1401 of receiving, from a storage server 110, a request 101 to store a data chunk 102; a step 1402 of determining whether the data chunk 102 is highly-duplicated among the storage servers 110; a step 1403 of accepting the request 101, if the data chunk 102 is highly-duplicated; a step 1404 of rejecting the request 101, if the data chunk 102 is not highly-duplicated. Particularly, the storage server 110 are the storage device 110 of FIG. 1.

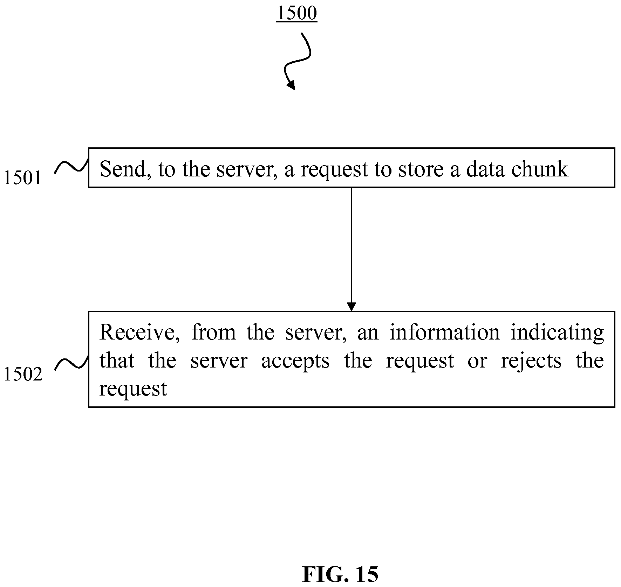

FIG. 15 shows a method 1500 performed by a storage server 110 for deduplicating at a global server 100, according to an embodiment of the present invention. In particular, the global server 100 is the global server 100 of FIG. 13, and the storage server 110 is the other storage server 110 of FIG. 13. The method 1500 comprises: a step 1501 of sending, to the global server 100, a request 101 to store a data chunk 102; and a step 1502 of receiving, from the global server 100, an information indicating that the global server 100 accepts the request 101 or rejects the request 101.

The present invention has been described in conjunction with various embodiments as examples as well as implementations.

In addition, the benefits of the invention can be summarized as:
- The storage servers are independent of each other.
- It saves storage space via deduplication.
- It allows highly-configurable control of resources and network traffic via HWM and LWM.
- It allows easy deployment.
- Simple scale-out (adding storage servers) and scale-down (removing storage servers).
- The simple deployment reduces needed maintenance and the possibility to human errors.

Moreover, it is realized by the skilled person that embodiments of the global server 100 and the storage server 110 comprises the necessary communication capabilities in the form of e.g., functions, means, units, elements, etc., for performing the solution. Examples of 21 other such means, units, elements and functions are: processors, memory, buffers, control logic, encoders, decoders, mapping units, multipliers, decision units, selecting units, switches, inputs, outputs, antennas, amplifiers, receiver units, transmitter units, power supply units, power feeders, communication interfaces, etc. which are suitably arranged together for performing the solution.

Especially, the processor(s) of the global server 100 and the storage server 110 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A global server (100) for deduplicating multiple storage servers (110), wherein the global server (100) is configured to:
receive, from a storage server (110), a request (101) to store a data chunk (102) on the global server (100);
determine whether the data chunk (102) is highly-duplicated among the multiple storage servers (110), wherein the data chunk (102) is determined to be highly-duplicated among the multiple storage servers (110), if a hash value of the data chunk (102) is associated at the global server (100) with a water mark equal to or higher than a determined value;
if the data chunk (102) is highly-duplicated, accept the request (101); and
if the data chunk (102) is not highly-duplicated, reject the request (101);
**characterised in that** the global server (100) is further configured to:
receive, from the storage server (110), a request (103) to remove a data chunk (102);
decrease a value of a water mark associated with the hash value of the data chunk (102); and
unregister the storage server (110) for that hash value;
wherein, if a water mark associated with a hash value of a data chunk (102) is equal to or below a second value, the global server (100) is configured to:
instruct each storage server (110) registered for the hash value of that data chunk (102), to copy the data chunk (102) from the global server (100); and
remove the data chunk (102) from the global server (100), after all storage servers (110) registered for the hash value store the data chunk (102) locally.

2. The global server (100) according to claim 1, wherein
the request (101) sent by the storage server (110) comprises the hash value of the data chunk (102).

3. The global server (100) according to claim 2, configured to:
create or increase a water mark associated with the hash value, upon receiving the request (101); and
register the storage server (110), which sent the request (101), for that hash value.

4. The global server (100) according to claim 3, wherein, if the water mark is equal to a first value, the global server (100) is configured to:
instruct the storage server (110) to send the data chunk (102) to the global server (100); and
store the data chunk (102).

5. The global server (100) according to claim 4, wherein, after the data chunk (102) is stored, the global server (100) is configured to:
notify the storage server (110) registered for the hash value of the data chunk (102) that the data chunk (102) has been stored.

6. A storage server (110) for deduplicating at a global server (100), wherein the storage server (110) is configured to:
send, to the global server (100), a request (101) to store a data chunk (102) on the global server (100); and
receive, from the global server (100), information indicating that the global server (100) accepts the request (101) or rejects the request (101);
**characterised in that**
if the information received from the global server (100) indicates that the global server (100) rejects the request (101), the storage server (110) is configured to:
store the data chunk (102) locally;
wherein the storage server (110) is further configured to:
receive, from the global server (100), a notification that the data chunk (102) has been stored in the global server (100);
remove the locally stored data chunk (102); and
request the data chunk (102) from the global server (100), if a user requests to read the data chunk (102).

7. The storage server (110) according to claim 6, wherein:
the request (101) sent to the global server (100) comprises a hash value of the data chunk (102).

8. The storage server (110) according to claim 6 or 7, configured to:
receive, from a user, a request to write the data chunk (102);
store the hash value of the data chunk (102); and
create or increase a local counter associated with the hash value.

9. The storage server (110) according to claim 8, configured to:
determine, whether to send to the global server (100), the request (101) to store the data chunk (102), if the local counter is equal to or greater than 1.

10. The storage server (110) according to one of the claim 6 to 9, wherein, if the information received from the global server (100) indicates that the global server (100) accepts the request (101), the storage server (110) is configured to:
receive, from the global server (100), an instruction to send the data chunk (102) to the global server (100); and
send the data chunk (102) to the global server (100).

11. A system (200) for deduplicating multiple storage servers (110), comprising a global server (100) according to one of the claims 1 to 5, and multiple storage servers (110) according to one of the claims 6 to 10.

12. A method (1400) performed by a global server (100) for deduplicating multiple storage servers (110), the method comprising:
receiving (1401), from a storage server (110), a request (101) to store a data chunk (102) on the global server (100);
determining (1402) whether the data chunk (102) is highly-duplicated among the storage servers (110), wherein the data chunk (102) is determined to be highly-duplicated among the multiple storage servers (110), if a hash value of the data chunk (102) is associated at the global server (100) with a water mark equal to or higher than a determined value;
if the data chunk (102) is highly-duplicated, accepting (1403) the request (101); and
if the data chunk (102) is not highly-duplicated, rejecting (1404) the request (101);
**characterised in that** the global server (100) is further configured to:
receive, from the storage server (110), a request (103) to remove a data chunk (102);
decrease a value of a water mark associated with the hash value of the data chunk (102); and
unregister the storage server (110) for that hash value;
wherein, if a water mark associated with a hash value of a data chunk (102) is equal to or below a second value, the global server (100) is configured to:
instruct each storage server (110) registered for the hash value of that data chunk (102), to copy the data chunk (102) from the global server (100); and
remove the data chunk (102) from the global server (100), after all storage servers (110) registered for the hash value store the data chunk (102) locally.

13. A method (1500) for deduplicating at a global server (100), the method comprising:
sending (1501), to the global server (100), a request (101) to store a data chunk (102); and
receiving (1502), from the global server (100), an information indicating that the global server (100) accepts the request (101) or rejects the request (101);
**characterised in that**
if the information received from the global server (100) indicates that the global server (100) rejects the request (101), the method further comprising:
storing the data chunk (102) locally;
wherein the method further comprising:
receiving, from the global server (100), a notification that the data chunk (102) has been stored in the global server (100);
removing the locally stored data chunk (102); and
requesting the data chunk (102) from the global server (100), if a user requests to read the data chunk (102).

## Patentansprüche

1. Globaler Server (100) zur Deduplizierung mehrerer Speicherserver (110), wobei der globale Server (100) zu Folgendem konfiguriert ist:
Empfangen einer Anfrage (101) von einem Speicherserver (110) zum Speichern eines Datenblocks (102) auf dem globalen Server (100);
Bestimmen, ob der Datenblock (102) unter den mehreren Speicherservern (110) stark dupliziert ist, wobei der Datenblock (102) als stark dupliziert unter den mehreren Speicherservern (110) bestimmt wird, wenn ein Hash-Wert des Datenblocks (102) auf dem globalen Server (100) einer Wassermarke gleich oder höher als ein bestimmter Wert zugeordnet ist;
wenn der Datenblock (102) stark dupliziert ist, Annehmen der Anfrage (101); und
wenn der Datenblock (102) nicht stark dupliziert ist, Ablehnen der Anfrage (101);
**dadurch gekennzeichnet, dass** der globale Server (100) ferner zu Folgendem konfiguriert ist:
Empfangen einer Anfrage (103) von dem Speicherserver (110) zum Entfernen des Datenblocks (102);
Verringern eines Werts eines Wasserzeichens, das dem Hash-Wert des Datenblocks zugeordnet ist (102); und
Aufheben der Registrierung des Speicherservers (110) für diesen Hash-Wert;
wobei, wenn ein einem Hash-Wert eines Datenblocks (102) zugeordnetes Wasserzeichen gleich oder kleiner einem zweiten Wert ist, der globale Server (100) zu Folgendem konfiguriert ist:
Anweisen jedes Speicherservers (110), der für den Hash-Wert dieses Datenblocks (102) registriert ist, das Datenstück (102) von dem globalen Server (100) zu kopieren; und
Entfernen des Datenblocks (102) von dem globalen Server (100), nachdem alle für den Hash-Wert registrierten Speicherserver (110) den Datenblock (102) lokal gespeichert haben.

2. Globaler Server (100) nach Anspruch 1, wobei die durch den Speicherserver (110) gesendete Anfrage (101) den Hash-Wert des Datenblocks (102) umfasst.

3. Globaler Server (100) nach Anspruch 2, der zu Folgendem konfiguriert ist:
Erstellen oder Erhöhen eines Wasserzeichens, das dem Hash-Wert zugeordnet ist, nach Empfangen der Anfrage (101); und
Registrieren des Speicherservers (110), der die Anfrage (101) gesendet hat, für diesen Hash-Wert.

4. Globaler Server (100) nach Anspruch 3, wobei, wenn das Wasserzeichen gleich einem ersten Wert ist, der globale Server (100) zu Folgendem konfiguriert ist:
Anweisen des Speicherservers (110), den Datenblock (102) an den globalen Server (100) zu senden; und
Speichern des Datenblocks (102).

5. Globaler Server (100) nach Anspruch 4, wobei, nachdem der Datenblock (102) gespeichert ist, der globale Server (100) zu Folgendem konfiguriert ist:
Benachrichtigen des Speicherservers (110), der für den Hash-Wert des Datenblocks (102) registriert ist, dass der Datenblock (102) gespeichert wurde.

6. Speicherserver (110) zur Deduplizierung auf einem globalen Server (100), wobei der Speicherserver (110) zu Folgendem konfiguriert ist:
Senden einer Anfrage (101) zum Speichern eines Datenblocks (102) auf dem globalen Server (100) an den globalen Server (100); und
Empfangen von Informationen von dem globalen Server (100) die angeben, dass der globale Server (100) die Anfrage (101) annimmt oder die Anfrage (101) ablehnt;
**dadurch gekennzeichnet, dass**
wenn die von dem globalen Server (100) empfangenen Informationen angeben, dass der globale Server (100) die Anfrage (101) ablehnt, der Speicherserver (110) zu Folgendem konfiguriert ist:
lokales Speichern des Datenblocks (102);
wobei der Speicherserver (110) ferner zu Folgendem konfiguriert ist:
Empfangen einer Benachrichtigung von dem globalen Server (100), dass der Datenblock (102) in dem globalen Server (100) gespeichert wurde;
Entfernen des lokal gespeicherten Datenblocks (102); und
Anfragen des Datenblocks (102) von dem globalen Server (100), wenn ein Benutzer anfragt, den Datenblock (102) zu lesen.

7. Speicherserver (110) nach Anspruch 6, wobei:
die an den globalen Server (100) gesendete Anfrage (101) einen Hash-Wert des Datenblocks (102) umfasst.

8. Speicherserver (110) nach Anspruch 6 oder 7, der zu Folgendem konfiguriert ist:
Empfangen einer Anfrage von einem Benutzer, den Datenblock (102) zu schreiben;
Speichern des Hash-Werts des Datenblocks (102); und
Erstellen oder erhöhen eines lokalen Zählers, der dem Hash-Wert zugeordnet ist.

9. Speicherserver (110) nach Anspruch 8, der zu Folgendem konfiguriert ist:
Bestimmen, ob die Anfrage (101) zum Speichern des Datenblocks (102) an den globalen Server (100) zu senden ist, wenn der lokale Zähler gleich oder größer als 1 ist.

10. Speicherserver (110) nach einem der Ansprüche 6 bis 9, wobei, wenn die von dem globalen Server (100) empfangenen Informationen angeben, dass der globale Server (100) die Anfrage (101) annimmt, der Speicherserver (110) zu Folgendem konfiguriert ist:
Empfangen einer Anweisung zum Senden eines Datenblocks (102) an den globalen Server (100) von dem globalen Server (100); und
Senden des Datenblocks (102) an den globalen Server (100).

11. System (200) zur Deduplizierung mehrerer Speicherserver (110), umfassend einen globalen Server (100) nach einem der Ansprüche 1 bis 5 und mehrere Speicherserver (110) nach einem der Ansprüche 6 bis 10.

12. Verfahren (1400), das durch einen globalen Server (100) durchgeführt wird, zur Deduplizierung mehrerer Speicherserver (110), wobei das Verfahren Folgendes umfasst:
Empfangen (1401) einer Anfrage (101) von einem Speicherserver (110) zum Speichern eines Datenblocks (102) auf dem globalen Server (100);
Bestimmen (1402), ob der Datenblock (102) unter den Speicherservern (110) stark dupliziert ist, wobei der Datenblock (102) als stark dupliziert unter den mehreren Speicherservern (110) bestimmt wird, wenn ein Hash-Wert des Datenblocks (102) auf dem globalen Server (100) einer Wassermarke gleich oder höher als ein bestimmter Wert zugeordnet ist;
wenn der Datenblock (102) stark dupliziert ist, Annehmen (1403) der Anfrage (101); und
wenn der Datenblock (102) nicht stark dupliziert ist, Ablehnen (1404) der Anfrage (101);
**dadurch gekennzeichnet, dass** der globale Server (100) ferner zu Folgendem konfiguriert ist:
Empfangen einer Anfrage (103) von dem Speicherserver (110) zum Entfernen des Datenblocks (102);
Verringern eines Werts eines Wasserzeichens, das dem Hash-Wert des Datenblocks zugeordnet ist (102); und
Aufheben der Registrierung des Speicherservers (110) für diesen Hash-Wert;
wobei, wenn ein einem Hash-Wert eines Datenblocks (102) zugeordnetes Wasserzeichen gleich oder kleiner einem zweiten Wert ist, der globale Server (100) zu Folgendem konfiguriert ist:
Anweisen jedes Speicherservers (110), der für den Hash-Wert dieses Datenblocks (102) registriert ist, das Datenstück (102) von dem globalen Server (100) zu kopieren; und
Entfernen des Datenblocks (102) von dem globalen Server (100), nachdem alle für den Hash-Wert registrierten Speicherserver (110) den Datenblock (102) lokal gespeichert haben.

13. Verfahren (1500) zur Deduplizierung auf einem globalen Server (100), wobei das Verfahren Folgendes umfasst:
Senden (1501) einer Anfrage (101) zum Speichern eines Datenblocks (102) an den globalen Server (100); und
Empfangen (1502) von Informationen von dem globalen Server (100) die angeben, dass der globale Server (100) die Anfrage (101) annimmt oder die Anfrage (101) ablehnt;
**dadurch gekennzeichnet, dass**
wenn die von dem globalen Server (100) empfangenen Informationen angeben, dass der globale Server (100) die Anfrage (101) ablehnt, das Verfahren ferner Folgendes umfasst:
lokales Speichern des Datenblocks (102);
wobei das Verfahren ferner umfasst:
Empfangen einer Benachrichtigung von dem globalen Server (100), dass der Datenblock (102) in dem globalen Server (100) gespeichert wurde;
Entfernen des lokal gespeicherten Datenblocks (102); und
Anfragen des Datenblocks (102) von dem globalen Server (100), wenn ein Benutzer anfragt, den Datenblock (102) zu lesen.

## Revendications

1. Serveur global (100) pour dédupliquer plusieurs serveurs de stockage (110), dans lequel le serveur global (100) est configuré pour :
recevoir, d'un serveur de stockage (110), une requête (101) pour stocker un bloc de données (102) sur le serveur global (100) ;
déterminer si le bloc de données (102) est fortement dupliqué parmi les multiples serveurs de stockage (110), dans lequel le bloc de données (102) est déterminé comme étant fortement dupliqué parmi les multiples serveurs de stockage (110), si une valeur de hachage du bloc de données (102) est associé au serveur global (100) à un filigrane égal ou supérieur à une valeur déterminée ;
si le bloc de données (102) est fortement dupliqué, accepter la requête (101) ; et
si le bloc de données (102) n'est pas fortement dupliqué, rejeter la requête (101) ;
**caractérisé en ce que** le serveur global (100) est en outre configuré pour :
recevoir, du serveur de stockage (110), une requête (103) pour supprimer un bloc de données (102) ;
diminuer une valeur d'un filigrane associé à la valeur de hachage du bloc de données (102) ; et
désenregistrer le serveur de stockage (110) pour cette valeur de hachage ;
dans lequel, si un filigrane associé à une valeur de hachage d'un bloc de données (102) est égal ou inférieur à une seconde valeur, le serveur global (100) est configuré pour :
demander à chaque serveur de stockage (110) enregistré pour la valeur de hachage de ce bloc de données (102) de copier le bloc de données (102) à partir du serveur global (100) ; et
supprimer le bloc de données (102) du serveur global (100), après que tous les serveurs de stockage (110) enregistrés pour la valeur de hachage stockent le bloc de données (102) localement.

2. Serveur global (100) selon la revendication 1, dans lequel la requête (101) envoyée par le serveur de stockage (110) comprend la valeur de hachage du bloc de données (102).

3. Serveur global (100) selon la revendication 2, configuré pour :
créer ou augmenter un filigrane associé à la valeur de hachage, lors de la réception de la requête (101) ; et
enregistrer le serveur de stockage (110), qui a envoyé la requête (101), pour cette valeur de hachage.

4. Serveur global (100) selon la revendication 3, dans lequel, si le filigrane est égal à une première valeur, le serveur global (100) est configuré pour :
demander au serveur de stockage (110) d'envoyer le bloc de données (102) au serveur global (100) ; et
stocker le bloc de données (102).

5. Serveur global (100) selon la revendication 4, dans lequel, après le stockage du bloc de données (102), le serveur global (100) est configuré pour :
notifier au serveur de stockage (110) enregistré pour la valeur de hachage du bloc de données (102) que le bloc de données (102) a été stocké.

6. Serveur de stockage (110) pour dédupliquer sur un serveur global (100), dans lequel le serveur de stockage (110) est configuré pour :
envoyer, au serveur global (100), une requête (101) pour stocker un bloc de données (102) sur le serveur global (100) ; et
recevoir, du serveur global (100), des informations indiquant que le serveur global (100) accepte la requête (101) ou rejette la requête (101) ;
**caractérisé en ce que**
si les informations reçues du serveur global (100) indiquent que le serveur global (100) rejette la requête (101), le serveur de stockage (110) est configuré pour :
stocker le bloc de données (102) localement ;
dans lequel le serveur de stockage (110) est en outre configuré pour :
recevoir, du serveur global (100), une notification indiquant que le bloc de données (102) a été stocké dans le serveur global (100) ;
supprimer le bloc de données stocké localement (102) ; et
demander le bloc de données (102) au serveur global (100), si un utilisateur demande à lire le bloc de données (102).

7. Serveur de stockage (110) selon la revendication 6, dans lequel :
la requête (101) envoyée au serveur global (100) comprend une valeur de hachage du bloc de données (102).

8. Serveur de stockage (110) selon la revendication 6 ou 7, configuré pour :
recevoir, d'un utilisateur, une requête d'écriture du bloc de données (102) ;
stocker la valeur de hachage du bloc de données (102) ; et
créer ou augmenter un compteur local associé à la valeur de hachage.

9. Serveur de stockage (110) selon la revendication 8, configuré pour :
déterminer s'il faut envoyer au serveur global (100) la requête (101) pour stocker le bloc de données (102), si le compteur local est égal ou supérieur à 1.

10. Serveur de stockage (110) selon l'une des revendications 6 à 9, dans lequel, si les informations reçues du serveur global (100) indiquent que le serveur global (100) accepte la requête (101), le serveur de stockage (110) est configuré pour :
recevoir, du serveur global (100), une instruction pour envoyer le bloc de données (102) au serveur global (100) ; et
envoyer le bloc de données (102) au serveur global (100).

11. Système (200) pour dédupliquer plusieurs serveurs de stockage (110), comprenant un serveur global (100) selon l'une des revendications 1 à 5, et de multiples serveurs de stockage (110) selon l'une des revendications 6 à 10.

12. Procédé (1400) exécuté par un serveur global (100) pour dédupliquer plusieurs serveurs de stockage (110), le procédé comprenant :
la réception (1401), d'un serveur de stockage (110), d'une requête (101) pour stocker un bloc de données (102) sur le serveur global (100) ;
le fait de déterminer (1402) si le bloc de données (102) est fortement dupliqué parmi les multiples serveurs de stockage (110), dans lequel le bloc de données (102) est déterminé comme étant fortement dupliqué parmi les multiples serveurs de stockage (110), si une valeur de hachage du bloc de données (102) est associé au serveur global (100) avec un filigrane égal ou supérieur à une valeur déterminée ;
si le bloc de données (102) est fortement dupliqué, l'acceptation (1403) de la requête (101) ; et
si le bloc de données (102) n'est pas fortement dupliqué, le rejet (1404) de la requête (101) ;
**caractérisé en ce que** le serveur global (100) est en outre configuré pour :
recevoir, du serveur de stockage (110), une requête (103) pour supprimer un bloc de données (102) ;
diminuer une valeur d'un filigrane associé à la valeur de hachage du bloc de données (102) ; et
désenregistrer le serveur de stockage (110) pour cette valeur de hachage ;
dans lequel, si un filigrane associé à une valeur de hachage d'un bloc de données (102) est égal ou inférieur à une seconde valeur, le serveur global (100) est configuré pour :
demander à chaque serveur de stockage (110) enregistré pour la valeur de hachage de ce bloc de données (102) de copier le bloc de données (102) à partir du serveur global (100) ; et
supprimer le bloc de données (102) du serveur global (100), après que tous les serveurs de stockage (110) enregistrés pour la valeur de hachage stockent le bloc de données (102) localement.

13. Procédé (1500) pour dédupliquer sur un serveur global (100), le procédé comprenant :
l'envoi (1501), au serveur global (100), d'une requête (101) pour stocker un bloc de données (102) ; et
la réception (1502), du serveur global (100), d'une information indiquant que le serveur global (100) accepte la requête (101) ou rejette la requête (101) ;
**caractérisé en ce que**
si les informations reçues du serveur global (100) indiquent que le serveur global (100) rejette la requête (101), le procédé comprend en outre :
le stockage du bloc de données (102) localement ;
dans lequel le procédé comprend en outre :
la réception, du serveur global (100), d'une notification indiquant que le bloc de données (102) a été stocké dans le serveur global (100) ;
la suppression du bloc de données stocké localement (102) ; et
la demande du bloc de données (102) au serveur global (100), si un utilisateur demande à lire le bloc de données (102).
